# EUROPÄISCHE PATENTSCHRIFT

(11) **EP 1 210 539 B1**
(45) Veröffentlichungstag und Bekanntmachung des Hinweises auf die Patenterteilung: **30.06.2004**
(21) Anmeldenummer: 00949459.2
(22) Anmeldetag: 05.08.2000
(51) Int. Cl.: F16L 3/237, F16L 3/223

(54) **ROHRLEITUNGSHALTER**
CONDUIT HOLDER
FIXATION POUR CANALISATIONS

(30) Priorität: 18.08.1999 DE 19939081
(43) Veröffentlichungstag der Anmeldung: 05.06.2002
(73) Patentinhaber: A. Raymond & Cie, 38028 Grenoble (FR)
(72) Erfinder: SCHWEIZER, Karl-Heinz, D-79541 Lörrach-Brombach (DE)
(74) Vertreter: Rüttgers, Joachim, Dr.
(86) Internationale Anmeldenummer: PCT/EP2000/007611
(87) Internationale Veröffentlichungsnummer: WO 2001/013020

(56) Entgegenhaltungen:
- EP-A- 0 802 366
- DE-A- 3 539 678
- DE-C- 692 092
- GB-A- 2 314 903
- US-A- 4 114 846

## Beschreibung

Die Erfindung geht aus von einem Halter zum gegenseitigen Festlegen von wenigstens zwei nebeneinander verlaufenden Rohrleitungen, bestehend aus einem Unterteil mit zwei oder mehreren Halteschalen zur Aufnahme der Rohrleitungen und einem Oberteil mit entsprechenden Gegenschalen zum Einklemmen der eingelegten Rohrleitungen sowie Rastmittel zum Verbinden des Oberteils mit dem Unterteil (DT 24 46 133 A1).

Bei derartigen Leitungshaltern besteht häufig das Problem, daß die Rohrleitungen sich aufgrund nicht vorgesehener, äußerer Krafteinwirkungen in axialer Richtung verschieben oder um die eigene Achse verdrehen, wodurch eine genaue Positionierung der Rohrleitungen nicht möglich ist. Dies wird insbesondere bei der Verlegung von vormontierten Kraftstoffleitungen im Kraftfahrzeugbau als unbefriedigend oder gar störend empfunden.

Zur axialen Festlegung der eingelegten Rohrleitungen ist aus DE 35 39 678 C2 eine Rohrschelle bekannt, bei der die Halteschalen des Unterteils aus je zwei elastisch aufweitbaren, dem Rohrleitungsquerschnitt angepaßten Klammern oder Schellen ausgebildet sind, wobei zwischen zwei Klammern jeweils ein Spalt freigelassen ist, und bei dem das Oberteil aus einem die Klammern übergreifenden Bügel besteht, welcher an seinem Mittelsteg in Schließstellung zwischen die Klemmschenkel der Klammern greifenden Keile oder Dome aufweist, welche die Klemmschenkel elastisch auseinanderspreizen und dabei fest gegen die Rohrleitungen drücken. Diese Rohrschelle sorgt zwar für ein stärkeres Einklemmen der eingelegten Rohrleitungen, doch ist, je nach äußerer Krafteinwirkung, eine Verdrehung oder axiale Verschiebung immer noch möglich.

Aufgabe der Erfindung ist es daher, den eingangs genannten Leitungshalter so zu gestalten, daß eine axiale Verschiebung oder Verdrehung der eingelegten Rohrleitungen absolut verhindert wird.

Zur Lösung dieser Aufgabe werden die im Anspruch 1 genannten Maßnahmen vorgeschlagen. Hierdurch ist es möglich, nach dem Einlegen der Rohrleitungen in das Unterteil und Einklemmen durch das Oberteil einen Stift in die Bohrung einzuschlagen, welcher die Außenwand der Rohrleitungen etwas eindrückt, ohne deren Durchflußquerschnitt nennenswert zu verändern. Bei Rohrleitungen aus Aluminium ist mit dem Eintreiben des Stiftes eine bleibende Deformation der Außenwand verbunden, während bei Rohrleitungen aus Kunststoff eine elastische Deformation für eine lagebestimmte Fixierung der Rohre im Leitungshalter sorgt.

Eine bevorzugte Ausführungsform des erfindungsgemäßen Rohrleitungshalters ist in der Zeichnung dargestellt und soll zusammen mit weiteren Ausgestaltungen der Erfindung nachfolgend näher beschrieben werden. Es zeigt:
- Fig. 1: einen offenen Rohrleitungshalter mit zwei Halteschalen in Seitenansicht,
- Fig. 2: den gleichen Leitungshalter in Draufsicht und
- Fig. 3: einen geschlossenen Leitungshatter mit eingeklemmten und fixierten Rohren in perspektivischer Darstellung mit Teilschnitt.

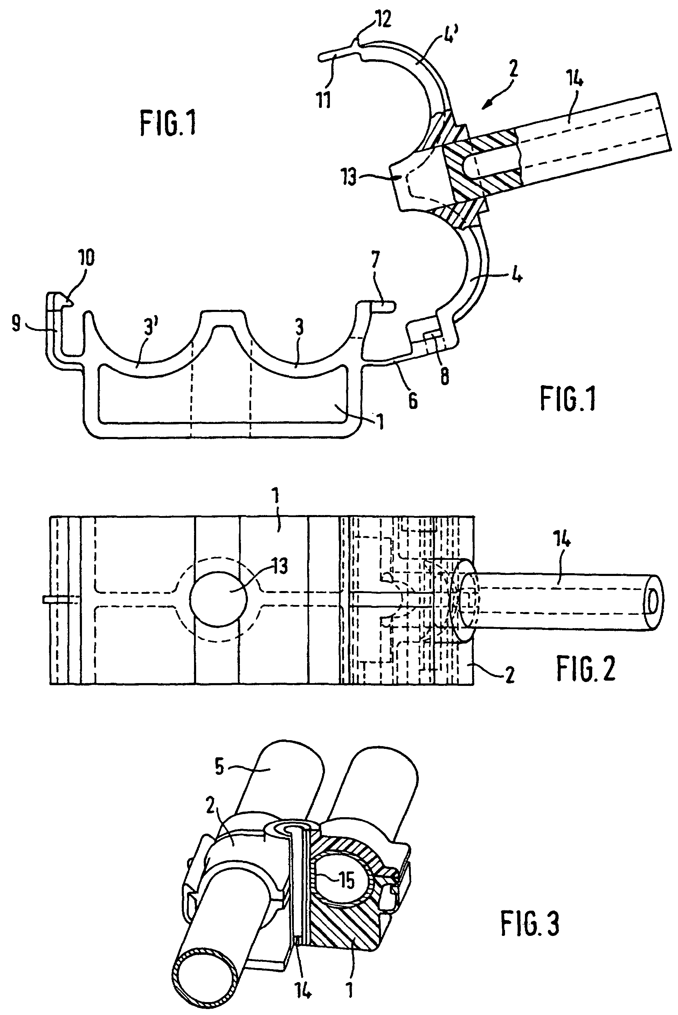

Der in den Figuren dargestellte Rohrleitungshalter besteht aus einem vorzugsweise aus Kunststoff hergestellten Unterteil **1** mit zwei Halteschalen **3** und **3'** zur Aufnahme der Rohrleitungen sowie einem aus dem gleichen Kunststoff hergestellten Oberteil **2** mit ebenfalls zwei Gegenschalen **4** und **4'**, welche im geschlossenen Zustand des Leitungshalters zusammen mit den unteren Halteschalen **3** und **3'** die nebeneinander verlaufenden Rohrleitungen **5** fest umschließen (Figur 3).

Das Unterteil **1** und das Oberteil **2** sind jeweils an einer Seite mittels eines dünnwandigen Steges **6** filmscharnierartig miteinander verbunden. Oberhalb des Steges **6** ist an der Außenseite der Halteschale **3** ein Vorsprung **7** angeformt, während am Übergang vom Steg **6** zur Halteschale **4** eine Aussparung **8** ausgebildet ist, in welche der Vorsprung **7** beim Absenken des Oberteils **2** eingreift.

Auf der anderen Seite des Unterteiles **1** ist neben dem Ende der Halteschale **3'** ein nach außen abstehender, in kurzem Abstand von der Halteschale **3'** etwa rechtwinklig hochgeführter Raststeg **9** angeformt, an dessen oberen Ende eine nach innen gerichtete Rastnase **10** absteht. Auf der gleichen Seite des Oberteils **2** ist am Ende der Halteschale **4'** ein nach unten gerichteter Steg **11** angeformt, welcher eine nach außen abstehende Rastnase **12** aufweist und beim Absenken des Oberteils **2** zwischen Raststeg **9** und Halteschale **3'** eintaucht, wobei die Rastnase **12** unter die Rastnase **10** gelangt und dort einrastet. Durch das Zusammenwirken mit dem in die Aussparung 8 eingreifenden Vorsprung 7 wird das Oberteil **2** mit dem Unterteil **1** sicher zusammengehalten (Figur 3).

Zwischen den beiden oberen Halteschalen **4, 4'** und den beiden unteren Halteschalen **3, 3'** ist senkrecht zu deren Mittelachsen eine durch Oberteil **2** und Unterteil **1** durchgehende Bohrung **13** vorgesehen, in welche ein die Bohrung ausfüllender Stift **14** eintreibbar ist. Dieser ist zweckmäßigerweise in der Bohrung **13** des Oberteiles **2** im Anlieferungszustand des Leitungshalters vormontiert, so daß der Stift **14** nach dem Einlegen der Rohrleitungen **5** und Schließen des Leitungshalters sofort mit einem geeigneten Werkzeug, bsp. einem Hammer eingetrieben werden kann.

Hierbei wird die Außenwand **15** der Rohrleitung **5** im Bereich der Bohrung **13** von dem Stift **14,** wie aus dem rechten Teilschnitt in Figur **3** ersichtlich, leicht nach innen gedrückt und dabei je nach dem Material der Rohrleitung **5** elastisch oder bleibend so deformiert, daß die Rohre **5** sich weder in axialer Richtung verschieben, noch um die eigene Achse verdrehen lassen.

## Patentansprüche

1. Halter zum gegenseitigen Festlegen von wenigstens zwei nebeneinander verlaufenden Rohrleitungen, bestehend aus einem Unterteil (1) mit zwei oder mehreren Halteschalen (3, 3') zur Aufnahme der Rohrleitungen (5) und einem Oberteil (2) mit entsprechenden Gegenschalen (44') zum Einklemmen der eingelegten Rohrleitungen (5) sowie Rastmittel zum Verbinden des Oberteils (1) mit dem Unterteil (2), **dadurch gekennzeichnet, daß** zwischen zwei benachbarten Schalen (3, 3' und 4, 4') senkrecht zu deren Mittelachse eine Bohrung (13) vorgesehen ist, deren Durchmesser so bemessen ist, daß die Schalen (3, 3' und 4, 4') von der Zylinderfläche der Bohrung (13) angeschnitten werden, und daß ein die Bohrung (13) ausfüllender Stift (14) vorgesehen ist, welcher nach dem Einklemmen der Rohrleitungen (5) und Verbinden des Oberteils (2) mit dem Unterteil (1) in die Bohrung (13) unter gleichzeitiger Deformation der Rohraußenwand (15) eintreibbar ist.

2. Leitungshalter nach Anspruch 1, wobei die beiden Halteteile (1,2) auf der einen Seite über einen dünnwandigen Steg (6) filmschamierartig miteinander verbunden sind und am Unterteil (1) einen Vorsprung (7) sowie am Oberteil (2) eine Aussparung (8) aufweisen, in die der Vorsprung (7) beim Absenken des Oberteils (2) eingreift, wohingegen auf der entgegengesetzten Seite der Halteteile (1, 2) miteinander verbindbare Rastvorsprünge (10, 12) angeformt sind, **dadurch gekennzeichnet, daß** die miteinander verbindbaren Rastvorspzünge (10, 12) so angeformt sind, daß an der auf der entgegengesetzten Seite der Halteteile (1, 2) liegenden Halteschale (3') ein nach außen abstehender, im kurzen Abstand von dieser Halteschale (3') etwa rechtwinklig hochgeführter Raststeg (9) angeformt ist, an dessen oberen Ende eine nach innen gerichtete Rastnase (10) absteht, während am freien Ende der darüberliegenden Gegenschale (4') ein nach unten gerichteter Steg (11) mit einer nach außen abstehenden Rastnase (12) angeformt ist.

## Claims

1. Holder for the mutual fixing of at least two pipe conduits running alongside each other, comprising a lower portion (1) and two or more holder shells (3, 3') for accommodating the pipe conduits (5) and an upper portion (2) with corresponding opposing shells (4, 4') for clamping. the inserted pipe conduits (5) and latching means for connecting the upper portion (1) with the lower portion (2), **characterised in that** between two adjacent shells (3, 3' and 4, 4') and perpendicular to their middle axis, a bore (13) is provided, whose diameter is dimensioned such that the shells (3, 3' and 4, 4') are cut by the cylindrical surface of the bore (13) and that a pin (14) filling the bore (13) is provided which, after clamping of the pipe conduits (5) and connecting of the upper portion (2) with the lower portion (1), may be driven into the bore (13), with simultaneous deformation of the pipe outer wall (15).

2. Conduit holder according to Claim 1, whereby the two holder portions (1, 2) are connected to each other on one side via a thin-walled web (6) in the manner of a film hinge and on the lower portion (1), have a projection (7) and on the upper portion (2) a recess (8) into which the projection (7) engages on lowering of the upper portion (2), whereas on the opposing side of the holder portions (1, 2), latching projections (10, 12) linkable to each other are formed, **characterised in that** the mutually linkable latching projections (10, 12) are formed such that on the holder shell (3') lying on the opposing side of the holder portions (1, 2) a latching web (9) standing outwards and bent upwards approximately at right angles a small distance from this holder shell (3') is formed, from the upper end of which latching web projects an inwardly directed latching nose (10), whilst at the free end of the opposing shell (4') lying above this, a downwardly directed web (11) is formed with a latching nose (12) directed outwards.

## Revendications

1. Support pour la fixation en opposition d'au moins deux canalisations disposées côte à côte, se composant d'une partie inférieure (1) comprenant deux ou un plus grand nombre de coquilles de retenue (3, 3') destinées à recevoir les canalisations (5) et d'une partie supérieure (2) munie de coquilles conjuguées correspondantes (4, 4') pour brider en position les canalisations (5) insérées dans celles-ci, ainsi que des éléments d'accrochage pour raccorder la partie supérieure (1) avec la partie inférieure (2), **caractérisé en ce qu'**entre deux coquilles voisines (3, 3'et 4, 4') il est prévu un alésage (13) disposé perpendiculairement. à leur axe, dont le diamètre est dimensionné dans une proportion telle que les coquilles (3, 3' et 4, 4') sont entamées par la surface cylindrique de l'alésage (13) et **en ce qu'**il est prévu une tige (14) épousant le gabarit de l'alésage (13), qui, après le bridage en position des canalisations (5) et le raccordement de la partie supérieure (2) avec la partie inférieure (1) est destinée à être enfoncée dans l'alésage (13) en provoquant, ce faisant, une déformation de la paroi extérieure (15) de la canalisation.

2. Support de canalisations selon la revendication 1, dans lequel les deux éléments de retenue (1, 2) sont, sur un côté, reliés ensemble au moyen d'une barrette entretoise (6) d'épaisseur réduite formant charnière à amincissement souple et présentent, sur la partie inférieure (1), un élément formant saillie (7) et sur la partie supérieure (2), un évidement (8) dans. lequel l'élément en saillie (7) vient en prise d'encastrement lorsqu'on rabat la partie supérieure (2), des saillies d'accrochage (10, 12) destinées à venir en prise d'engagement réciproque étant par contre réalisées solidaires par moulage du côté opposé des éléments de retenue (1, 2), **caractérisé en ce que** les saillies d'accrochage (10, 12) destinées à venir en prise d'engagement réciproque, sont réalisées solidaires par moulage avec une configuration telle qu'au niveau de la coquille de retenue (3') se trouvant sur le côté opposé des éléments de retenue (1, 2), un élément d'accrochage par encastrement (9) faisant saillie vers l'extérieur, se dressant suivant une orientation sensiblement en angle droit à faible distance de cette coquille de retenue (3'), est réalisé solidaire par moulage et comporte à son extrémité supérieure un tenon d'accrochage (10) orienté vers l'intérieur, tandis qu'au niveau de l'extrémité libre de la coquille conjuguée (4') disposée au-dessus de celle-ci, une barrette (11) orientée vers le bas, munie d'un tenon d'accrochage (12) faisant saillie vers l'extérieur, est réalisé solidaire par moulage.
